# EUROPEAN PATENT APPLICATION

(11) **EP 3 290 545 A1**
(43) Date of publication of application: **07.03.2018**
(21) Application number: 15890372.4
(22) Date of filing: 06.05.2015
(51) Int. Cl.: C23C 24/10, B23K 26/00, G01N 21/00

(54) **LASER CLADDING TOOL HEAD AND TO-BE-PROCESSED SURFACE SENSING METHOD THEREFOR**

(30) Priority: 28.04.2015 CN 201510208054
(71) Applicant: Tongtai Machine & Tool Co., Ltd., Kaohsiung City 82151 (TW)
(72) Inventor: CHEN, HsinPao, Kaohsiung 82151 (TW); KAO, Huaien, Kaohsiung 82151 (TW); LIU, Zongshin, Kaohsiung 82151 (TW); TSAI, Tsunghsien, Kaohsiung 82151 (TW); CHEN, Tingchang, Kaohsiung 82151 (TW); YEN, Juihsiung, Kaohsiung 82151 (TW)
(74) Representative: Patentanwälte Olbricht Buchhold Keulertz
(86) International application number: PCT/CN2015/078367
(87) International publication number: WO 2016/172992

(57) **Abstract**

A laser cladding tool head and a to-be-processed surface sensing method therefor, which are used for a computer numerical control (CNC) processing machine (100). The laser cladding tool head (20) is also provided with a thermal temperature gauge sensing module (24) and a photographic lens sensing module (25), and is configured to sense temperature, brightness and shape of a molten pool during cladding operation and provide same to a computer numerical control unit (40) for feedback control, thereby further improving processing efficiency and quality of a workpiece.

## Description

### FIELD OF THE INVENTION

The present invention relates to a laser cladding tool head and a machined surface sensing method thereof, and more particularly to a laser cladding tool head and a machined surface sensing method thereof with a temperature sensor and a camera.

### BACKGROUND OF THE INVENTION

A traditional computer numerical control (CNC) machining center can process various cutting operations by changing different cutting tool heads, but only the cutting operations are processed. When a welding (repair welding) or heat treatment operation is necessary to be pressed therewith, it must use other machine tools, so that the steps and the process time of the machining operations are substantially increased.

Especially, for a machining method using laser, such as a laser cladding operation, it must use special laser machine tools to work. Therefore, if the laser machine tool is necessary to be used in entire of the machining processes, a work-piece is moved, fixed, and machined in different machine tools, so that a dismount-move-fix-machining process is repeated. Thus, if a laser cladding tool head is used in a hybrid CNC machining center, users can accomplish cutting and laser cladding operations for a work-piece just in one single machine, so that the work-piece is unnecessary to be moved between different machines. Therefore, the steps and the process time of the machining operations are substantially simplified.

However, a common laser cladding tool head does not have a machined surface sensing function, so that a laser power thereof cannot be adjusted according to an actual machined surface situation, or only a single sensing function is provided, so that a comprehensive feedback and adjustment for the machined surface cannot be made.

For improving the above-mentioned defects, it is necessary to provide a laser cladding tool head and a machined surface sensing method thereof, so as to solve the problems existing in the conventional technologies.

### SUMMARY OF THE INVENTION

The object of the present invention is to provide a laser cladding tool head and a machined surface sensing method thereof, wherein the laser cladding tool head has a temperature sensing module and a camera sensing module, which can sense the temperature, lightness, and profile of a molten pool, and then provide them to a computer numerical control unit for a feedback control.

In order to accomplish the above-mentioned object, the present invention provides a laser cladding tool head of a hybrid computer numerical control (CNC) machining center, which comprises:
a shell body; a shank portion disposed on a top of the shell body, and detachably combined with a tool holder chuck of the hybrid CNC machining center; and a laser module including a laser input portion, a laser output portion, and a spectroscopic assembly, wherein the laser input portion is horizontally disposed on a side surface of the spectroscopic assembly, and the laser output portion is perpendicularly disposed on a bottom surface of the spectroscopic assembly; the spectroscopic assembly has a spectroscope; an exterior laser source horizontally inputs a laser beam through the laser input portion; and the laser beam is reflected downward by the spectroscope, and is outputted to a work-piece through the laser output portion; wherein the laser cladding tool head further comprises: a first sensing module including a first optical assembly and a first sensing element, wherein the first optical assembly has a half reflecting mirror disposed above the spectroscopic assembly of the laser module; and the first sensing element is disposed beside the first optical assembly, and configured to detect a machined surface of a work-piece through the half reflecting mirror and the spectroscope; and a second sensing module including a second optical assembly and a second sensing element, wherein the second optical assembly has a total reflecting mirror disposed above the first optical assembly of the first sensing module; and the second sensing element is disposed beside the second optical assembly, and configured to detect the machined surface of the work-piece through the total reflecting mirror, the half reflecting mirror and the spectroscope.

In one embodiment of the present invention, the first sensing element of the first sensing module is a temperature sensor; and the second sensing element of the second sensing module is a camera.

In one embodiment of the present invention, the first sensing element of the first sensing module is a camera; and the second sensing element of the second sensing module is a temperature sensor.

In one embodiment of the present invention, one end of the laser input portion is connected to the side surface of the spectroscopic assembly, and the other end thereof is disposed on a side surface of the shell body to form a laser entrance; and one end of the laser output portion is connected to the bottom surface of the spectroscopic assembly, and the other end thereof is disposed on a bottom surface of the shell body to form a laser exit.

In one embodiment of the present invention, the half reflecting mirror of the first optical assembly is disposed with a 45 degree inclination; and the total reflecting mirror of the second optical assembly is disposed with a 45 degree inclination.

In order to accomplish the above-mentioned object, the present invention provides a machined surface sensing method of a laser cladding tool head, comprising steps of:
providing a laser cladding tool head, which comprises: a laser module, a first sensing module, and a second sensing module; wherein the laser module includes a spectroscopic assembly having a spectroscope, an exterior laser source horizontally inputs a laser beam, and then the laser beam is reflected downward by the spectroscope to a work-piece; the first sensing module includes a first optical assembly, which has a half reflecting mirror disposed above the spectroscopic assembly of the laser module, and a first sensing element, which is disposed beside the first optical assembly; and the second sensing module includes a second optical assembly, which has a total reflecting mirror disposed above the first optical assembly of the first sensing module, and a second sensing element, which is disposed beside the second optical assembly;
operating the first sensing module, which is configured to detect a machined surface of a work-piece through the half reflecting mirror and the spectroscope; and
operating the second sensing module, which is configured to detect the machined surface of the work-piece through the total reflecting mirror, the half reflecting mirror and the spectroscope.

In one embodiment of the present invention, the first sensing element of the first sensing module is a temperature sensor, and the second sensing element of the second sensing module is a camera; or the first sensing element of the first sensing module is a camera, and the second sensing element of the second sensing module is a temperature sensor.

In one embodiment of the present invention, during processing a cladding operation on the machined surface of the work-piece, detecting a temperature of a molten pool of the machined surface by the temperature sensor, and providing the detected temperature of the molten pool to a computer numerical control unit, wherein if the temperature of the molten pool is under a default temperature, a power of the laser cladding tool head is increased; and if the temperature of the molten pool is over the default temperature, the power of the laser cladding tool head is decreased.

In one embodiment of the present invention, during processing a cladding operation on the machined surface of the work-piece, detecting a lightness and profile of the molten pool of the machined surface by the camera, and providing the detected lightness and profile of the molten pool to a computer numerical control unit, wherein if the lightness and profile of the molten pool is under a default condition, the power of the laser cladding tool head is increased; and if the lightness and profile of the molten pool is over the default condition, the power of the laser cladding tool head is decreased.

In one embodiment of the present invention, during processing a cladding operation on the machined surface of the work-piece, firstly detecting a temperature of a molten pool of the machined surface by the temperature sensor, and providing the detected temperature of the molten pool to a computer numerical control unit, wherein if the temperature of the molten pool is under a default temperature, a power of the laser cladding tool head is increased; and if the temperature of the molten pool is over the default temperature, the power of the laser cladding tool head is decreased; and then detecting a lightness and profile of the molten pool of the machined surface by the camera, and providing the detected lightness and profile of the molten pool to the computer numerical control unit, wherein if the lightness and profile of the molten pool is under a default condition, the power of the laser cladding tool head is increased; and if the lightness and profile of the molten pool is over the default condition, the power of the laser cladding tool head is decreased.

As mentioned above, the laser cladding tool head simultaneously includes a temperature sensing module and a camera sensing module, so that it can sense the temperature, lightness, and profile of a molten pool, and then provide them to a computer numerical control unit for a feedback control, so as to increase the processing effect and quality of a work-piece.

### DESCRIPTION OF THE DRAWINGS

Fig. 1 is a schematic structural view of a hybrid computer numerical control (CNC) machining center according to a first embodiment of the present invention;
Fig. 2 is a flow chart of a machining method of the hybrid CNC machining center according to the first embodiment of the present invention;
Figs. 3A-3B are schematic views showing a lightness and profile of a molten pool are detected in the first embodiment of the present invention;
Fig. 4 is a flow chart of a machining method of a hybrid CNC machining center according to a second embodiment of the present invention;
Fig. 5 is a schematic structural view of a laser cladding tool head according to a third embodiment of the present invention;
Fig. 6 is a schematic operating view of the laser cladding tool head according to the third embodiment of the present invention; and
Fig. 7 is a flow chart of a machined surface sensing method of the laser cladding tool head according to the third embodiment of the present invention.

### DETAILED DESCRIPTION OF THE PREFERRED EMBODIMENTS

The foregoing objects, features, and advantages adopted by the present invention can be best understood by referring to the following detailed description of the preferred embodiments and the accompanying drawings. Furthermore, the directional terms described in the present invention, such as upper, lower, front, rear, left, right, inside, outer, side, etc., are only directions with reference to the accompanying drawings, so that the used directional terms are used to describe and understand the present invention, but the present invention is not limited thereto.

A computer numerical control (CNC) machining center in the present invention can be a CNC machine tool, which has a single machining axial direction or a plurality of machining axial directions, and comprises at least an automatic tool change (ATC) system to contain a plurality of machining tool heads, such as a five-axis milling/lathing machining center, not limited in the present invention. A structure of a hybrid CNC machining center and a machining method thereof according to the present invention are described in detail below.

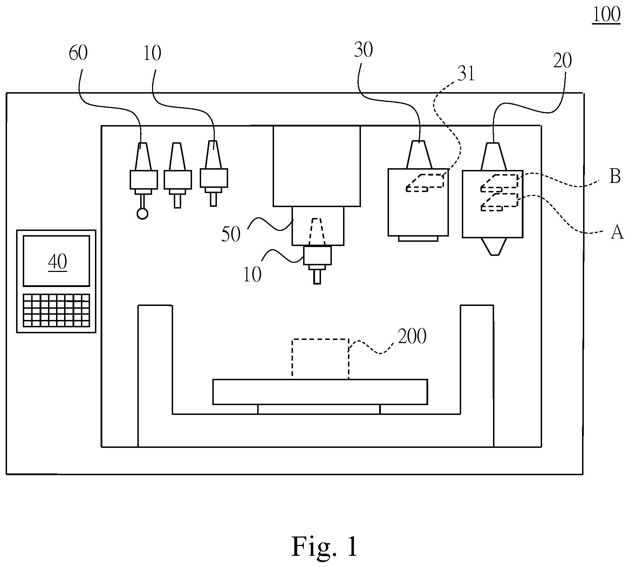

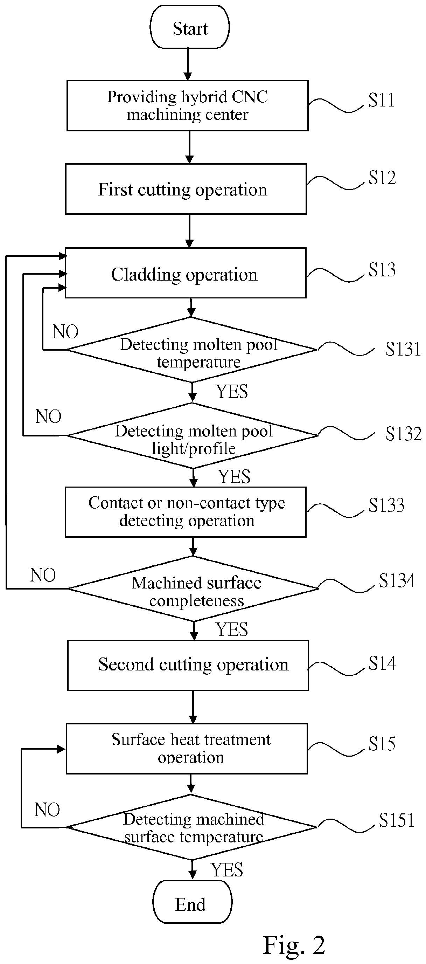

Refer now to Figs. 1 and 2, wherein Fig. 1 is a schematic structural view of a hybrid CNC machining center according to a first embodiment of the present invention; and Fig. 2 is a flow chart of a machining method of the hybrid CNC machining center according to the first embodiment of the present invention. A hybrid CNC machining center 100 according to the present invention comprises: at least a cutting tool head 10, a laser cladding tool head 20, a laser surface heat treatment tool head 30, and a computer numerical control unit 40, wherein the cutting tool head10, the laser cladding tool head 20 and the laser surface heat treatment tool head 30 are alternately installed in a tool holder 50 of the hybrid CNC machining center 100. The cutting tool head 10 is configured to cut at least a machined surface of a work-piece 200; the laser cladding tool head 20 is configured to clad the machined surface; and the laser surface heat treatment tool head 30 is configured to heat treat the machined surface.

For more detailed description, the cutting tool head 10 can be a milling or lathing machining tool head, which belongs to a subtractive metal machining method; the laser cladding tool head 20 is adopted a laser cladding metal machining method, which belongs to an additive metal machining method, by using an additive manufacturing principle to add material, which using a laser beam to melt metal powder to stack material, so that it can be applied to a direct manufacture or a defect repair in mode and aviation blade fields; and the laser surface heat treatment tool head 30 is adopted a laser to emit on a partial metal machined surface to achieve an effect of metal heat treatment, which is a surface quality improving technology, so as to process a surface heat treatment, so that a hardness or quality adjustment of a surface of a machine assembly is increased, and it also can be applied to a heat treatment for a surface of a component, so as to increase hardness thereof to against wear and tear. The laser cladding tool head 20 and the laser surface heat treatment tool head 30 can be connected to an exterior laser source (not shown) through a hose (not shown), respectively. In the hose, an optical fiber assembly is disposed therein, so as to transmit a laser beam, also a needed material, to the laser cladding tool head 20 and the laser surface heat treatment tool head 30.

Refer now to Figs. 1 and 2. A machining method of the hybrid CNC machining center according to the first embodiment of the present invention comprises steps of:
S11: providing a hybrid CNC machining center 100 including at least a cutting tool head 10, a laser cladding tool head 20, a laser surface heat treatment tool head 30, and a computer numerical control unit 40, wherein the cutting tool head 10, the laser cladding tool head 20 and the laser surface heat treatment tool head 30 are alternately installed in a tool holder 50 of the hybrid CNC machining center 100;
S12: processing a first cutting operation, wherein the cutting tool head 10 is configured to cut at least a machined surface of a work-piece 200;
S13: processing a cladding operation, wherein the laser cladding tool head 20 is configured to clad the machined surface;
S14: processing a second cutting operation, wherein the cutting tool head 10 is configured to cut the cladded machined surface; and
S15: processing a surface heat treatment operation, wherein the laser surface heat treatment tool head 30 is configured to heat treat the machined surface.

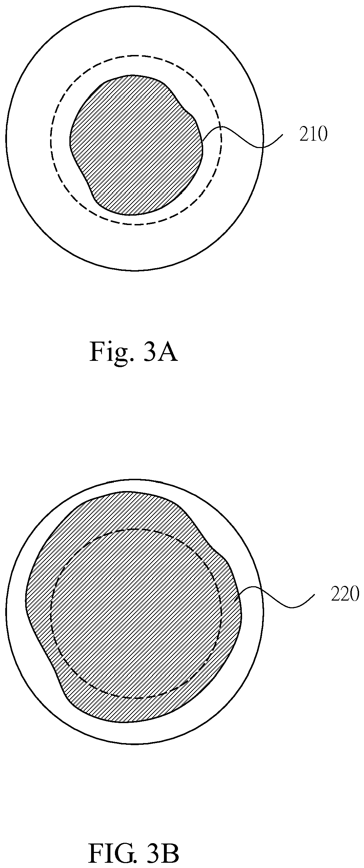

Preferably, the laser cladding tool head 20 further includes a temperature sensor A and a camera B; and the cladding operation further includes a detecting step of a temperature of a molten pool S131 and a detecting step of a lightness and profile of the molten pool S132. During the step of processing the cladding operation S13, firstly detect a temperature of a molten pool of the machined surface by the temperature sensor A, and provide the detected temperature of the molten pool to the computer numerical control unit 40. If the temperature of the molten pool is under a default temperature, a power of the laser cladding tool head 20 is increased; and if the temperature of the molten pool is over the default temperature, the power of the laser cladding tool head 20 is decreased. Then detect a lightness and profile of the molten pool of the machined surface by the camera B, and provide the detected lightness and profile of the molten pool to the computer numerical control unit 40. If the lightness and profile of the molten pool is under a default condition (as shown in Fig 3A, showing a profile 210 of the molten pool is detected by the camera B, wherein a dotted line indicates a default size of the molten pool), the power of the laser cladding tool head 20 is increased; and if the lightness and profile of the molten pool is over the default condition (as shown in Fig 3B, showing a profile 220 of the molten pool is detected by the camera B, wherein a dotted line indicates the default size of the molten pool), the power of the laser cladding tool head 20 is decreased.

Preferably, the hybrid CNC machining center further comprises a contact or non-contact type detecting tool head 60; and the cladding operation further includes a contact or non-contact type detecting operation S133. If a completeness of the cladded machined surface is achieved, a following step is processed; and if the completeness of the cladded machined surface is not achieved, a cladding operation (step S134) is processed again.

Preferably, the laser surface heat treatment tool head 30 further includes a temperature sensor 31, and the surface heat treatment operation S15 further includes a detecting step of a temperature of a machined surface. During the step of processing the heat treatment operation S15, detect a temperature of the machined surface by the temperature sensor 31, and provide the detected temperature of the machined surface to the computer numerical control unit 40. If the temperature of the machined surface is under a default temperature, a power of the laser surface heat treatment tool head 30 is increased; and if the temperature of the machined surface is over the default temperature, the power of the laser surface heat treatment tool head 30 is decreased.

As mentioned above, the hybrid CNC machining center 100 according to the first embodiment of the present invention simultaneously includes the cutting tool head 10, the laser cladding tool head 20, and the laser surface heat treatment tool head 30, so that it can alternately process machining operations. For example, when a mode is partially damaged to be repaired, firstly cut the damaged place to be flat in the first cutting operation of S12; then add enough volume of the mode in the cladding operation of S13; next finish the repair of the mode in the second cutting operation of S14; and process a partial surface heat treatment in the surface heat treatment operation of S15. Hence, users can accomplish cutting, laser cladding, and laser surface heat treatment operations for the work-piece just in one single machine, so that the work-piece is unnecessary to be moved between different machines. Therefore, the steps and the process time of the machining operations are substantially simplified.

Additionally, the hybrid CNC machining center 100 according to the first embodiment of the present invention simultaneously includes the temperature sensor A and the camera B, so that it can detect the temperature, lightness and profile of the molten pool, and provide these to the computer numerical control unit 40 to process a feedback control. Therefore, the machining effect and quality of the work-piece are further increased.

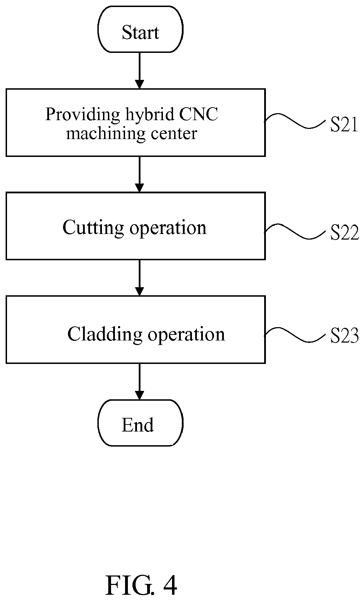

Refer now to Fig 4, which is a flow chart of a machining method of a hybrid CNC machining center according to a second embodiment of the present invention. A machining method of the hybrid CNC machining center according to the second embodiment of the present invention comprises steps of:
S21: providing a hybrid CNC machining center 100 including at least a cutting tool head 10, a laser cladding tool head 20, and a computer numerical control unit 40, wherein the cutting tool head 10 and the laser cladding tool head 20 are alternately installed in a tool holder 50 of the hybrid CNC machining center 100;
S22: processing a cutting operation, wherein the cutting tool head 10 is configured to cut at least a machined surface of a work-piece 200; and
S23: processing a cladding operation, wherein the laser cladding tool head 20 is configured to clad the machined surface;

By the above-mentioned machining method, users can accomplish cutting and laser cladding operations for the work-piece just in one single machine, so that the work-piece is unnecessary to be moved between different machines. Therefore, the steps and the process time of the machining operations are substantially simplified. Furthermore, users can flexibly add any other step in the machining method according to the first embodiment of the present invention, so as to increase the machining effect and quality.

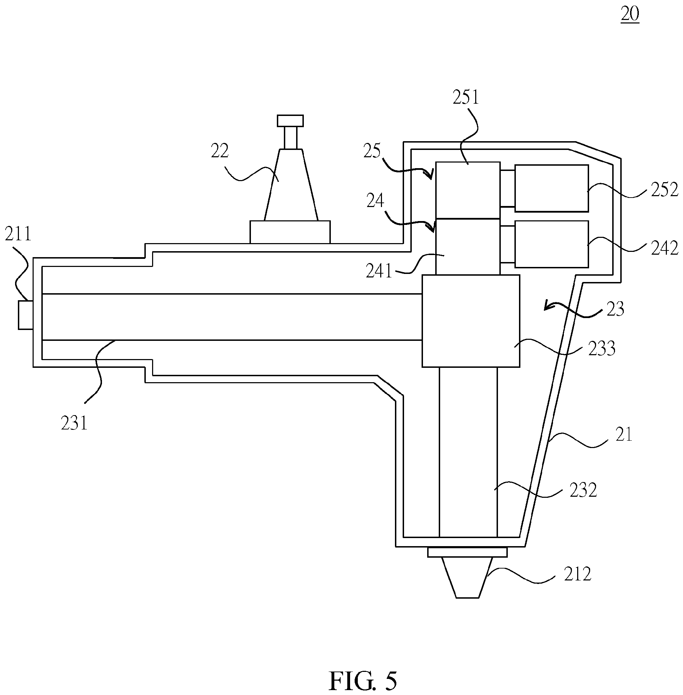

Refer now to Fig 5, which is a schematic structural view of a laser cladding tool head according to a third embodiment of the present invention. In the above-mentioned embodiment of the present invention, the laser cladding tool head 20 further comprises: a shell body 21, a shank portion 22 , and a laser module 23, wherein the shank portion 22 is disposed on a top of the shell body 21, and is detachably combined with a tool holder chuck 50 of the above-mentioned hybrid CNC machining center 100; and the laser module 23 includes a laser input portion 231, a laser output portion 232, and a spectroscopic assembly 233, wherein the laser input portion 231 is horizontally disposed on a side surface of the spectroscopic assembly 233, and the laser output portion 232 is perpendicularly disposed on a bottom surface of the spectroscopic assembly 233.

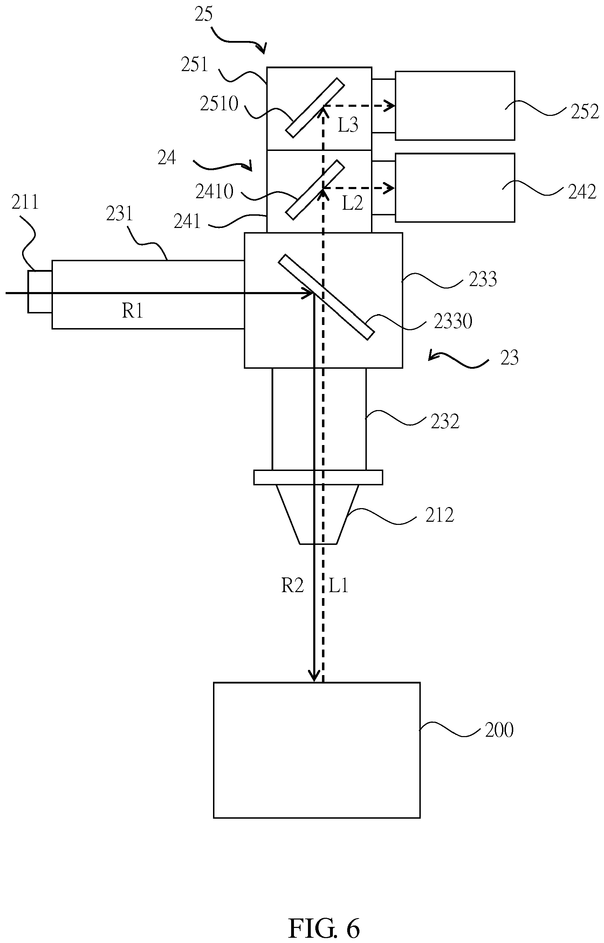

Refer now to Fig 6, which is a schematic operating view of the laser cladding tool head according to the third embodiment of the present invention, and for clearly expressing, only related elements of the cladding tool head are selectively shown in the figure. As shown in Fig. 6, the spectroscopic assembly 233 has a spectroscope 2330. The spectroscope 2330 can be an optical assembly which has a beam split function, such as a prism or a half reflecting mirror. Furthermore, the laser cladding tool head further includes a first sensing module 24 and a second sensing module 25, which are disposed above the spectroscopic assembly 233 of the laser module 23, respectively.

As shown in Fig. 6, the first sensing module 24 includes a first optical assembly 241 and a first sensing element 242, wherein the first optical assembly 241 has a half reflecting mirror 2410 disposed above the spectroscopic assembly 233 of the laser module 23; and the first sensing element 242 is disposed beside the first optical assembly 241. Additionally, the second sensing module 25 includes a second optical assembly 251 and a second sensing element 252, wherein the second optical assembly 251 has a total reflecting mirror 2510 disposed above the first optical assembly 241 of the first sensing module 24; and the second sensing element 252 is disposed beside the second optical assembly 251.

As shown in Fig. 6, when an exterior laser source (not shown) horizontally inputs a laser beam R1 through the laser input portion 231, the laser beam is reflected downward through the spectroscope 2330 to be a laser beam R2, and then the laser beam R2 is outputted to a work-piece 200 through the laser output portion 232. At the same time, a sensing (direction) of the first sensing module 24 is reflected downward through the half reflecting mirror 2410 to passes through the spectroscope 2330, (namely, the surface of the work-piece 200 is reflected upward a light beam L1, passes through the spectroscope 2330, and then is reflected through the half reflecting mirror 2410 to be a light beam L2 delivered to the first sensing module 24), so that the first sensing module 24 can detect a situation of a machined surface of the work-piece 200. Simultaneously, a sensing (direction) of the second sensing module 25 is reflected downward through the total reflecting mirror 2510 to passes through the half reflecting mirror 2410 and the spectroscope 2330, orderly, (namely, the surface of the work-piece 200 is reflected upward a light beam L1, firstly passes through the spectroscope 2330, and next passes through the half reflecting mirror 2410, and then is reflected through the total reflecting mirror 2510 to be a light beam L3 delivered to the second sensing module 25), so that the second sensing module 25 can detect the situation of the machined surface of the work-piece 200.

Specifically, one end of the laser input portion 231 is connected to a side surface of the spectroscopic assembly 233, and the other end thereof is disposed on a side surface of the shell body 21 to form a laser entrance 211; and one end of the laser output portion 232 is connected to a bottom surface of the spectroscopic assembly 233, and the other end thereof is disposed on a bottom surface of the shell body 21 to form a laser exit 212. Additionally, the half reflecting mirror 2410 of the first optical assembly 241 is disposed with a 45 degree inclination, and the total reflecting mirror 2510 of the second optical assembly 251 is disposed with a 45 degree inclination.

Furthermore, in one possible embodiment of the present invention, the first sensing element 242 of the first sensing module 24 is a temperature sensor, namely the temperature sensor A according to the first embodiment of the present invention; and the second sensing element 252 of the second sensing module 25 is a camera; namely the camera B according to the first embodiment of the present invention. Probably, in another possible embodiment of the present invention, the first sensing element 242 of the first sensing module 24 is a camera, namely the camera B according to the first embodiment of the present invention; and the second sensing element 252 of the second sensing module 25 is a temperature sensor, namely the temperature sensor A according to the first embodiment of the present invention.

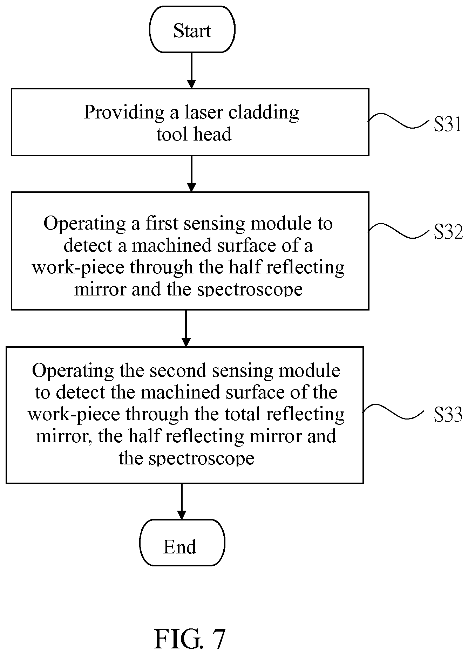

Refer now to Fig 7, which is a flow chart of a machined surface sensing method of the laser cladding tool head according to the third embodiment of the present invention. The machined surface sensing method of the laser cladding tool head comprises steps of:
S31: providing a laser cladding tool head 20 which comprises the structure of the above-mentioned embodiment of the present invention;
S32: operating the first sensing module 24, which is configured to detect a machined surface of a work-piece through the half reflecting mirror and the spectroscope;
S33: operating the second sensing module, which is configured to detect the machined surface of the work-piece through the total reflecting mirror, the half reflecting mirror and the spectroscope.

In one possible embodiment of the present invention, the first sensing module 24 can be a temperature sensor module, and the second sensing module 25 can a camera sensor module. Probably, in another possible embodiment of the present invention, the first sensing module 24 can be a camera sensor module, and the second sensing module 25 can a temperature sensor module. Furthermore, the steps S32 and S33 can be changed their order, or to be executed alone. According to an actual requirement, users can flexibly adjust it, and apply it to the first and second embodiment of the present invention, not limited in the present invention.

As mentioned above, the present invention provides the laser cladding tool head and the machined surface sensing method thereof, by the laser cladding tool head simultaneously including a temperature sensing module and a camera sensing module, the laser cladding tool head can sense the temperature, lightness, and profile of a molten pool, and then provide them to a computer numerical control unit for a feedback control, so as to increase the processing effect and quality of a work-piece.

The present invention has been described with preferred embodiments thereof and it is understood that many changes and modifications to the described embodiment can be carried out without departing from the scope and the spirit of the invention that is intended to be limited only by the appended claims.

## Claims

1. A laser cladding tool head of a hybrid computer numerical control (CNC) machining center, comprising:
a shell body;
a shank portion disposed on a top of the shell body, and detachably combined with a tool holder chuck of the hybrid CNC machining center; and
a laser module including a laser input portion, a laser output portion, and a spectroscopic assembly, wherein the laser input portion is horizontally disposed on a side surface of the spectroscopic assembly, and the laser output portion is perpendicularly disposed on a bottom surface of the spectroscopic assembly; the spectroscopic assembly has a spectroscope;
an exterior laser source horizontally inputs a laser beam through the laser input portion; and the laser beam is reflected downward by the spectroscope, and is outputted to a work-piece through the laser output portion;
wherein the laser cladding tool head further comprises:
a first sensing module including a first optical assembly and a first sensing element, wherein the first optical assembly has a half reflecting mirror disposed above the spectroscopic assembly of the laser module; and the first sensing element is disposed beside the first optical assembly, and configured to detect a machined surface of a work-piece through the half reflecting mirror and the spectroscope; and
a second sensing module including a second optical assembly and a second sensing element, wherein the second optical assembly has a total reflecting mirror disposed above the first optical assembly of the first sensing module; and the second sensing element is disposed beside the second optical assembly, and configured to detect the machined surface of the work-piece through the total reflecting mirror, the half reflecting mirror and the spectroscope.

2. The laser cladding tool head according to Claim 1, wherein the first sensing element of the first sensing module is a temperature sensor; and the second sensing element of the second sensing module is a camera.

3. The laser cladding tool head according to Claim 1, wherein the first sensing element of the first sensing module is a camera; and the second sensing element of the second sensing module is a temperature sensor.

4. The laser cladding tool head according to Claim 1, wherein one end of the laser input portion is connected to the side surface of the spectroscopic assembly, and the other end thereof is disposed on a side surface of the shell body to form a laser entrance; and one end of the laser output portion is connected to the bottom surface of the spectroscopic assembly, and the other end thereof is disposed on a bottom surface of the shell body to form a laser exit.

5. The laser cladding tool head according to Claim 1, wherein the half reflecting mirror of the first optical assembly is disposed with a 45 degree inclination; and the total reflecting mirror of the second optical assembly is disposed with a 45 degree inclination.

6. A machined surface sensing method of a laser cladding tool head, comprising steps of:
providing a laser cladding tool head, which comprises: a laser module, a first sensing module, and a second sensing module; wherein the laser module includes a spectroscopic assembly having a spectroscope, an exterior laser source horizontally inputs a laser beam, and then the laser beam is reflected downward by the spectroscope to a work-piece; the first sensing module includes a first optical assembly, which has a half reflecting mirror disposed above the spectroscopic assembly of the laser module, and a first sensing element, which is disposed beside the first optical assembly; and the second sensing module includes a second optical assembly, which has a total reflecting mirror disposed above the first optical assembly of the first sensing module, and a second sensing element, which is disposed beside the second optical assembly;
operating the first sensing module, which is configured to detect a machined surface of a work-piece through the half reflecting mirror and the spectroscope; and
operating the second sensing module, which is configured to detect the machined surface of the work-piece through the total reflecting mirror, the half reflecting mirror and the spectroscope.

7. The machined surface sensing method of the laser cladding tool head according to Claim 6, wherein the first sensing element of the first sensing module is a temperature sensor, and the second sensing element of the second sensing module is a camera; or the first sensing element of the first sensing module is a camera, and the second sensing element of the second sensing module is a temperature sensor.

8. The machined surface sensing method of the laser cladding tool head according to Claim 7, wherein during processing a cladding operation on the machined surface of the work-piece, detecting a temperature of a molten pool of the machined surface by the temperature sensor, and providing the detected temperature of the molten pool to a computer numerical control unit, wherein if the temperature of the molten pool is under a default temperature, a power of the laser cladding tool head is increased; and if the temperature of the molten pool is over the default temperature, the power of the laser cladding tool head is decreased.

9. The machined surface sensing method of the laser cladding tool head according to Claim 7, wherein during processing a cladding operation on the machined surface of the work-piece, detecting a lightness and profile of the molten pool of the machined surface by the camera, and providing the detected lightness and profile of the molten pool to a computer numerical control unit, wherein if the lightness and profile of the molten pool is under a default condition, the power of the laser cladding tool head is increased; and if the lightness and profile of the molten pool is over the default condition, the power of the laser cladding tool head is decreased.

10. The machined surface sensing method of the laser cladding tool head according to Claim 7, wherein during processing a cladding operation on the machined surface of the work-piece, firstly detecting a temperature of a molten pool of the machined surface by the temperature sensor, and providing the detected temperature of the molten pool to a computer numerical control unit, wherein if the temperature of the molten pool is under a default temperature, a power of the laser cladding tool head is increased; and if the temperature of the molten pool is over the default temperature, the power of the laser cladding tool head is decreased; and then detecting a lightness and profile of the molten pool of the machined surface by the camera, and providing the detected lightness and profile of the molten pool to the computer numerical control unit, wherein if the lightness and profile of the molten pool is under a default condition, the power of the laser cladding tool head is increased; and if the lightness and profile of the molten pool is over the default condition, the power of the laser cladding tool head is decreased.
